# EUROPEAN PATENT SPECIFICATION

(11) **EP 2 234 521 B1**
(45) Date of publication and mention of the grant of the patent: **08.02.2012**
(21) Application number: 08863825.9
(22) Date of filing: 23.12.2008
(51) Int. Cl.: A47J 27/21

(54) **LIQUID HEATING DEVICES**
FLÜSSIGKEITSERHITZUNGSVORRICHTUNGEN
DISPOSITIFS DE CHAUFFAGE DE LIQUIDE

(30) Priority: 24.12.2007 GB 0725236; 09.05.2008 GB 0808446; 22.08.2008 GB 0815436
(43) Date of publication of application: 06.10.2010
(73) Proprietor: STRIX LIMITED, Ronaldsway Isle of Man IM9 2RG (GB)
(72) Inventor: GARVEY, Vincent, Joseph, Colby (GB); MOUGHTON, Colin, Port St Mary (GB); NICHOL, Norman, Eric, Santon (GB)
(74) Representative: Samuels, Adrian James
(86) International application number: PCT/GB2008/004252
(87) International publication number: WO 2009/081159

(56) References cited:
- EP-A- 0 811 345
- EP-A- 1 738 675
- GB-A- 2 064 078
- US-A1- 2004 118 292

## Description

This invention relates to devices for heating water or other liquids, particularly heating a relatively small volume of liquid in a short space of time.

There is a common need almost all over the world to heat water in order to make beverages. In the UK and other parts of Europe, it is common for most households to own a kettle which is used to boil water for making occasional beverages. In larger establishments and also in other parts of the world, it is more common to keep a body of water hot or boiling for a prolonged period of time - possibly all day - in order to be able to make such beverages "on demand", i.e. without having to wait for the water to heat up from room temperature. An example of this would be a traditional electric urn or, more commonly in Asia, a so-called airpot.

The document GB-2064078 discloses a water boiler.

Both of these arrangements have their disadvantages. In the case of the kettle, the time taken for the water to heat from cold (i.e. the temperature from which it is drawn from the tap) is seen as inconvenient to users, even those using very high power kettles (of the order of 3 kilowatts). This is particularly so given the difficulty in estimating the volume of water required when the kettle is being filled and the attendant tendency to boil more water than is needed which of course increases the time taken for it to boil. On the other hand, if water is kept for a prolonged period of time either at or just below boiling, a significant amount of energy will be required to counter the unavoidable heat loss.

Recently, devices attempting to bridge this gap have been commercialised. These are said to be able to deliver a cupful of hot water from a reservoir of cold water within a matter of seconds. However, these devices are typically based on a tubular flow heater and the applicant has appreciated some significant drawbacks to this arrangement. Firstly, as is typical of tubular flow heaters, heating must be ceased before the water in the tube reaches boiling point in order to avoid the danger of the heater overheating through hot spots created by pockets of water vapour and/or the pressure inside the tube building up too high. Another drawback is that although the heater heats up relatively quickly, there is inevitably an initial volume of water which passes through the heater which is not heated to the target temperature. This mixes with the water produced later, itself still not at boiling point, to reduce the average temperature of the water. The combination of these two factors means that in practice the water provided by such devices is at well below boiling point by the time it is dispensed making it unsuitable for example for making tea and thereby limiting its consumer appeal.

The present invention provides an apparatus for heating a measured amount of water to boiling as claimed in claim 1.

The heating chamber is configured to heat a body of liquid, e.g. water, therein to boiling, with the increase in pressure associated with boiling forcing the heated liquid into the conduit and venting it into the dispensing chamber. This means that the dangerous pressurised boiling water and steam are safely ejected into the dispensing chamber whilst the water can be dispensed at the outlet in a slower, more uniform flow which is essentially independent of the water still coming in from the heating chamber. In other words, the dispensing chamber acts effectively to decouple the outlet from the heating chamber from the outlet to the user.

There are several possible ways in which the liquid in the dispensing chamber could be dispensed. For example, it is feasible that a timer arrangement of some sort or a manually operated dispense mechanism could be provided. In one set of embodiments the heated liquid in the dispensing chamber is simply allowed to drain out through a hole communicating with a spout. The dimensions of this hole can be chosen to give a safe maximum outflow rate.

In other embodiments the dispensing chamber is configured to dispense liquid therein when the liquid in the dispensing chamber has reached a predetermined level. There are of course a myriad of mechanical or electronic ways in which this could be achieved although it is presently preferred in such embodiments to use a simple siphon arrangement in which, when the water level reaches the predetermined level, the siphon is set up and continues to drain the liquid in the dispensing chamber.

On its own a siphon arrangement would continue to dispense, preferably boiling, liquid until a predetermined volume had been dispensed. In some applications this might be perfectly acceptable - for example a drip tray of sufficiently capacity could be provided in case the user forgot to place a cup or other receptacle under the spout.

However, in some preferred embodiments means are provided to prevent the flow of water from the spout after dispensing has commenced. In some preferred embodiments therefore the outlet siphon arrangement comprises means to disrupt the siphon e.g. by allowing air into the siphon tube. In one preferred example, a resilient push button is provided which, when depressed, opens a valve to permit air into the siphon tube, thereby breaking the siphon.

Although the dispensing chamber is preferably configured such that steam exiting the inlet arrangement of the dispensing chamber re-condenses e.g. during its passage through the liquid held in the chamber, it is likely that some steam will pass up into the space above the liquid. It is preferred therefore that the dispensing chamber has one or more ventilation outlets on the upper part thereof to prevent the build-up of pressure above the retained liquid. This has the advantages that enough steam reaches the steam switch and also prevents the dispense rate from being too fast.

In a preferred set of embodiments, the inlet to the dispensing chamber comprises a weir. This can advantageously catch any initial discharge of cold water from the pipe to prevent it being dispensed from the dispensing chamber in the form of a pre-dispense dribble. It can also assist in decoupling pressurised boiling water and steam exiting the heating chamber from the dispenser outlet. Preferably in such embodiments drainage means are provided to drain the contents of the weir between operations. Conveniently the drainage means is arranged to drain back into the heating chamber. In one convenient example the drainage means comprises a slit in the dispensing chamber inlet tube, ideally below the height of the weir.

The heater could take any convenient form. It could, for example, comprise an immersion type heater or, preferably, a heater forming a wall of the heating chamber, preferably the base of the heating chamber. Indeed, in convenient embodiments the heater is substantially similar to that used in ordinary domestic kettles, e.g. with a sheathed resistance heating element bonded to the underside of the heater plate. In alternative embodiments a thick film heater could be employed.

In presently preferred embodiments , the liquid reservoir is provided adjacent the heating chamber and is in selective fluid communication therewith. For example the heating chamber could comprise a sub-divided portion of a larger liquid reservoir from which liquid is selectively permitted to pass into the heating chamber when required. Preferably the heating chamber is below the rest of the reservoir so that water can flow therein under gravity/hydrostatic pressure.

In some embodiments the reservoir is removable - e.g. to permit re-filling.

In one set of embodiments the valve is closed when the heating chamber is filled to the required level. For example the position of said valve might be dependent upon the level of water in the heating chamber. In one set of such embodiments, a flap valve is provided which is configured so as to be held shut when the heating chamber is filled to the required level. Conveniently the valve is configured to be buoyant to achieve this. Conveniently this could comprise a downwardly open cup at the distal end of the valve, in which air is trapped in use by the liquid beneath, thus causing the flap to be pressed against its valve seat when the heating chamber is filled to the required level.

It has been found that in at least some embodiments of the invention, the fact that after a cycle of use the heating chamber is filled with e.g. water vapour, means that when such a valve opens and thereby lets water in, the water vapour in the chamber rapidly condenses and so creates a significantly lower pressure in the chamber which sucks water in from the main reservoir very quickly and somewhat violently. This can give rise to a loud and unwanted noise. Also over repeated operations, this could lead to the risk of damage to a simple flap valve or that it might become stuck.

In accordance with one set of embodiments, a freely floating valve member is employed, which is more robust than a flap valve. Advantageously, such a valve member is received in a housing which permits liquid flow through it but retains the valve member, the valve member having an upper position in which it is against a valve seat to close the valve and a lower position where it is retained in the lower part of the housing. In some embodiments the housing comprises an upper part and a lower part clipped into the upper part wherein the clips are configured such that they are prevented from moving sufficiently to release the lower part of the housing by the valve member when it is in said lower position. In accordance with such embodiments, even with a violent inflow of liquid into the heating chamber, the valve member remains securely retained.

The valve member might take any convenient form. For example it could comprise a ball. Alternatively it could be pill, discus or squat-cylindrical in shape. In a preferred set of embodiments the valve member is downwardly tapering, e.g. frusto-conical. This has been found to minimise the chance of the valve member sticking during use.

In all embodiments where the heating chamber is separated from a reservoir by a valve, the valve is preferably configured such that increasing pressure in the heating chamber tends to force the valve closed. This will of course be the case with the flap valve and valve members discussed above.

The valve could comprise a simple, e.g. circular, orifice in the wall separating the water reservoir and heating chamber. In one set of preferred embodiments however the orifice has a shape comprising a plurality of lobes extending from a central region. This has been found, for a given area of orifice, to provide better flow characteristics by allowing air from the heating chamber to pass into the reservoir through the lobes.

In some preferred embodiments the valve inlet is configured to admit liquid primarily laterally rather than primarily vertically. Also preferred is that one or more baffles is provided around the valve inlet. These measures each help to avoid too much air being drawn into the heating chamber when the level of liquid in the reservoir is low. This reduces noise as the Applicant has discovered that it is the sharp intake of air which gives rise to high noise levels.

As mentioned previously, in some embodiments the valve is closed automatically when the heating chamber is sufficiently filled. However in some embodiments the apparatus may be provided with means for maintaining fluid communication between the reservoir and the heating chamber during heating. For example where a valve is provided there would be means for selectively holding the valve open during heating. The result of this is that rather than heat a relatively small, isolated body of liquid in the heating chamber; all of the liquid in the reservoir and the heating chamber would be heated, e.g. to boiling, thereby mimicking a conventional liquid heating vessel such as a kettle. The selective operation of the aforementioned means permits a single apparatus to be used in either mode which offers advantages in terms of flexibility and energy efficiency since only the required volume of water need be boiled, and also avoids the need for consumers to find counter space for multiple products.

Preferably the heating chamber is provided with a pressure relief valve that opens when pressure in the heating chamber exceeds a threshold. This could arise for example if the outlet tube should become blocked for any reason. A conventional pressure relief valve venting to the atmosphere could be provided - e.g. similar to those found on traditional espresso coffee makers. In preferred embodiments however the pressure relief valve is configured to vent excess pressure into an unpressurised part of the interior of the appliance - e.g. the water reservoir where such is provided. This is considered to be safer in essentially eliminating the risk, however unlikely, that steam will be vented, at pressure, near a user. Moreover in a preferred set of embodiments it allows the pressure-relief valve to perform a second function whereby it also acts to admit water into the heating chamber. In other words in some preferred embodiments the valve is configured to open when there is a pressure differential across it in either direction. Preferably it is configured to open at a lower pressure differential in one direction than the other. This allows it to function as described above more effectively since the vacuum set up in the heating chamber at the end of the heating cycle will typically represent a lower pressure differential to atmospheric than the over-pressure at which pressure relief is required.

In a preferred set of arrangements the valve described above comprises a domed resilient diaphragm having at least one slit defined therein. The domed shape gives the asymmetric pressure characteristics mentioned above. As the pressure on the concave side of the diaphragm becomes increasingly greater than on the convex side, e.g. because a vacuum is created on the convex side, the slit in the diaphragm is forced open, thereby allowing fluid communication through it. This functioning makes it suitable for admitting water into the heating chamber when a vacuum is formed therein after it has been emptied of boiling water. In preferred embodiments therefore the valve is between the water reservoir and heating chamber with the concave side of the diaphragm facing the water reservoir. The valve described here could replace the flap valve or floating valve member arrangements described above. Preferably however it is provided in addition thereto. This helps to reduce the unwanted noise associated with a rapid suction of water into the heating chamber as it increases the overall effective area through which the water is sucked.

Should pressure in the heating chamber approach a dangerous level at any stage, the pressure on the convex side will become sufficient to reverse the curvature of the diaphragm in a 'snap' action which causes the slit to open and so allow a reduction in pressure in the heating chamber.

More than one slit may be provided - e.g. to form a cross or star shape. Preferably the diaphragm is made of silicone or similar inert, water resistant material. This is advantageous over the conventional metal pressure-relief valves for prolonged contact with water. The valves described herein have also been found to have a more controllable maximum operating pressure which allows them to be safer as a they can be designed to vent at a lower pressure in a fault condition whilst still avoiding leakage in normal use.

Since the boiling liquid is forced under pressure into the conduit and into the dispensing chamber, the dispensing chamber could be provided at any convenient disposition relative to the heating chamber e.g. to the side of it or below it, but preferably the dispensing chamber is above the heating chamber. In a particularly preferred set of embodiments, the heating chamber and dispensing chamber are provided respectively in the lower and upper parts of a vessel, with the vessel defining a water reservoir therebetween.

Ventilation means are provided to the heating chamber. There are several potential benefits to this. One potential benefit is that the ventilation could reduce the build-up of pressure in the heating chamber during the initial stages of heating to prevent water being ejected from the conduit before it has been sufficiently heated. Another benefit is to vent away steam which can destabilise the valve member during the heating phase thus letting in cold water which would increase the boil time. Another potential benefit is that it can act to prevent a dangerous build-up of pressure in the heating chamber in the event that the outlet conduit becomes blocked for any reason. This might be in addition to or instead of a pressure relief valve, e.g. of the type discussed hereinabove.

The ventilation means is open to air. This is beneficial in avoiding a potential source of noise when pressurised air and steam passes through the water reservoir. It can also help in the smooth admission of water into the heating chamber from the reservoir by allowing the displaced air to escape.

The ventilation means could be arranged to vent to the exterior of the appliance but this is not considered ideal as it raises the possibility of steam being ejected near to a user. Preferably therefore it is vented to an airspace within the appliance. This could be a specially-designed space, or the reservoir. Preferably though the ventilation means is arranged to vent to the dispensing chamber. The ventilation means preferably vents from the upper part of the heating chamber, most preferably from the upper surface thereof - i.e. it vents from the 'headspace' created when the heating chamber is filled with water, to try to ensure that gases rather than liquids are ejected from it.

Typically the dimensions of the ventilation means will be chosen so that when water in the chamber is first heated the pressure build-up therein is insufficient to eject it into the dispensing chamber, but as the water approaches boiling, sufficient pressure is developed in the heating chamber to eject the water.

As mentioned previously, in accordance with preferred embodiments the liquid in the heating chamber is heated to boiling and thereby forced into the dispensing chamber via the conduit. However, the applicant has recognised that since it is a relatively small volume of water being heated, the thermal inertia of a typical heating element, for example a sheathed element attached to the underside of the base of the heating chamber (a so called 'underfloor' heater) can become significant. However, by taking this into account, thermal stress on the element can be reduced by deliberately switching the element off before the liquid in the heating chamber reaches boiling point and relying on the residual heat in the element to bring the liquid to boiling and eject it. This reduces the risk of the element being energised without being in contact with liquid and therefore overheating.

Of course, the temperature at which the element needs to be switched off in order to achieve this effect is dependent on the liquid being heated, its volume and on the thermal mass of the element itself. Using a standard sheathed underfloor element and a heating chamber volume of approximately 200 ml, it has been found that the temperature at which the element needs to be switched off is approximately 90°C. Thus, in accordance with some embodiments of the invention, a control means is provided which is configured to interrupt power to the element when the temperature of the water has reached 90°C. Conveniently, such a control may be provided in the form of a variant of one of the applicant's new series of controls developed for kettles (further details of which are disclosed in WO 95/34187), but with one of the bimetallic actuators being replaced with one having an operating temperature of approximately 90°C. Using such a control advantageously provides a second backup actuator in the event of the element overheating e.g. by being operated with no water in the heating chamber which might be as a result of there being no water in the reservoir.

In an alternative set of embodiments, the apparatus is configured to switch off the heating element in response to detection of another part of the heating and dispense cycle. In one set of embodiments the apparatus comprises means for switching off the heating element responsive to the presence of at least one of water, steam, or an elevated temperature or pressure in the dispensing chamber. For example in one embodiment a float-operated switch is provided in association with the dispensing chamber to switch off the element when a predetermined liquid level is reached in the dispensing chamber. In another embodiment a steam-sensitive actuator is used to switch off the element.

In a preferred set of embodiments, a conventional steam switch is provided in gaseous communication with the heating chamber such that steam produced therein impinges on the steam switch. In preferred embodiments the steam switch is provided at the top of a vertical tube, the neck of said tube being narrower than the conduit and/or the tube otherwise being configured to prevent the heated water from being forced into it as boiling point is reached.

In any of the embodiments set out above the mechanism for switching off the element could be configured such that there is enough pressure for all or substantially all of the liquid being heated in the heating chamber to be ejected. However in accordance with some embodiments envisaged the configuration of the heating chamber and element switching-off mechanism could be such as deliberately to leave some liquid remaining in the heating chamber. This could be beneficial in reducing the 'thermal shock' suffered by the element and/or heating chamber when fresh, colder liquid is added e.g. from a reservoir. For example, the Applicant has found that by making the conduit tube referred to above shorter, some liquid is left in the heating chamber at the end of the cycle.

Certain preferred embodiments of the invention will now be described, by way of example only, with reference to the accompanying drawings in which:
Fig. 1 is a cutaway view of a vessel provided for reference purposes only ;
Figs. 2 and 3 are cross-sections through the heating chamber of the vessel of Fig. 1;
Fig. 4 is a cross-section through the dispensing chamber and outlet spout of the vessel of Fig. 1;
Fig. 5 is a view similar to Fig. 4 of the dispensing chamber of a different vessel also provided for reference purposes only ;
Fig. 6 is a cross-section through the heating chamber of another different vessel also provided for reference purposes only,
Fig. 7 is a sectional view through the heating chamber and steam tube of another different vessel also provided for reference purposes only ,
Fig. 8 is a sectional view through the dispensing chamber of another different vessel also provided for reference purposes only;
Fig. 9 is a sectional view through the dispensing chamber of another different vessel also provided for reference purposes only;
Fig. 10 is a perspective view of the heating chamber upper wall member of a further different vessel also provided for reference purposes only showing two separate valve arrangements:
Fig. 11 is a sectioned view from beneath of the wall member of Fig. 10;
Fig. 12 is a perspective view of a pressure relief valve;
Fig_{.} 13 is a sectional view of the valve of Fig. 12;
Fig. 14 is a schematic representation of another different vessel also provided for reference purposes only which can be used in two different modes;
Fig. 15 is view of the major components of an embodiment of the invention;
Fig. 16 is a partly sectional view of the embodiment of Fig. 15;
Fig. 17 is a perspective view of the dispensing chamber lower section;
Fig. 18 is a perspective view of the dispensing chamber upper section; and
Figs. 19 and 20 are sectional views of the dispensing chamber.

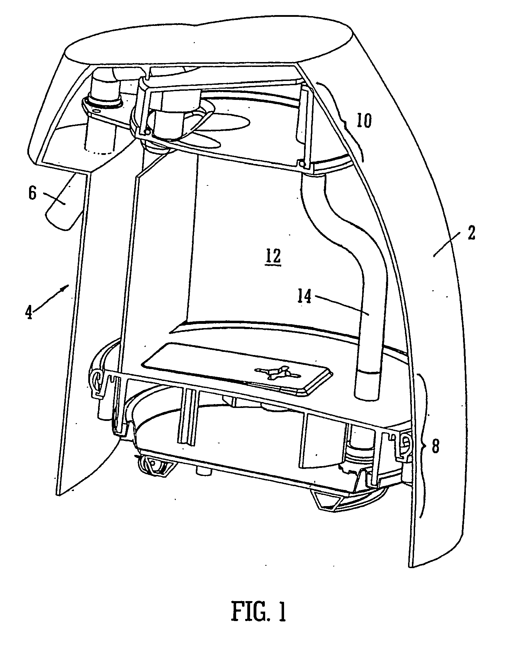

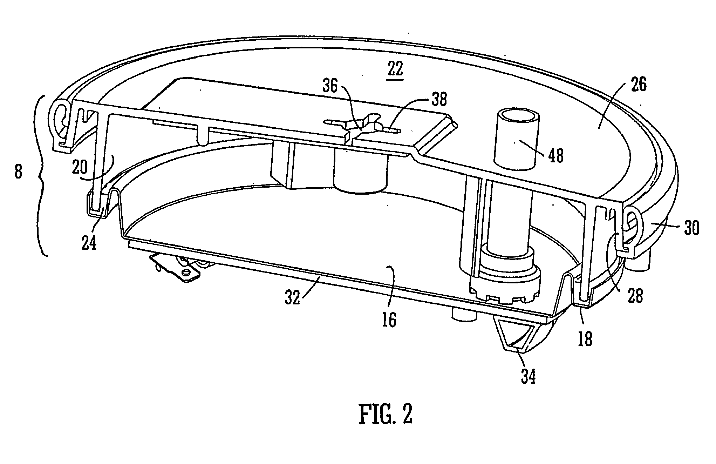

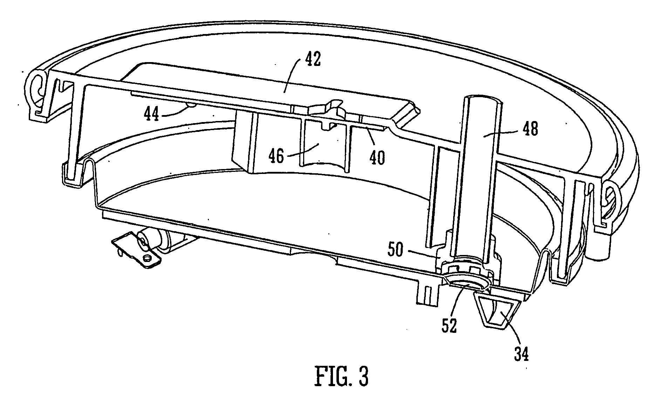

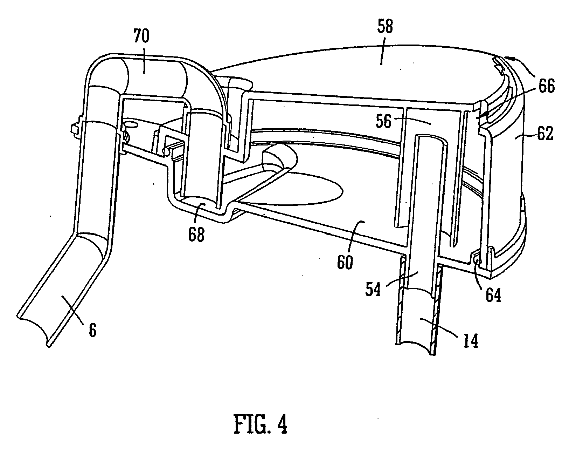

Turning firstly to Fig. 1 there is shown a hot water dispensing vessel which has an outer body 2 with a front "undercut" portion 4 defining a space that permits a user to place a cup or other receptacle under an outlet spout 6. Inside, the vessel is divided into three main parts. In the lower part of the vessel is a heating chamber 10 which will be described in greater detail below with reference to Figs. 2 and 3. At the upper part of the vessel is a dispensing chamber 10 which will be described in greater detail below with reference to Fig. 4. Between the heating chamber 8 and the dispensing chamber 10 is a water reservoir section 12. This can be filled using a suitable opening in the body (not shown). A conduit tube 14 passes through the water reservoir 12 and connects the heating chamber 8 to the dispensing chamber 10.

Turning now to Figs. 2 and 3, the heating chamber 8 may be seen in more detail. The base of the heating chamber is defined by an underfloor heating element arrangement as is well-known to those skilled in the art of kettles and other water boilers. It thus comprises a metallic, preferably stainless steel plate 16 which has a generally planar central portion but is formed at its periphery with an upwardly open channel 18 which receives a downwardly depending wall portion 20 of heating chamber cover member 22. Also in the channel 18 is an L-section seal and, as is well-known in the art and described in greater detail in WO 96/18331, the walls of the peripheral channel 18 can in use be clamped together to form a secure and watertight seal between the heating plate 16 and the downwardly depending wall portion 20.

The aforementioned annular wall portion 20 depends downwardly from an approximately planar upper portion 26 of the heating chamber cover member 22.

Radially outwardly of the aforementioned annular wall 20 is a further downwardly depending annular wall 28 at the periphery of the cover member 22. A seal 30 is fitted around the outside of the abovementioned wall 28 and, as may be appreciated by referring back to Fig. 1, the seal 30 serves to seal the chamber member against the main vessel wall 2. The particular type of seal used in this embodiment is described in greater detail in EP-A-1683451, but the particular form of seal is not essential to the invention.

The heating chamber therefore encloses an approximately disc-shaped volume which might be somewhere in the order of 200 to 500ml.

On the underside of the metallic plate 16 is a thin aluminium heater diffuser plate to which is brazed an arcuate sheathed electric heating element 34 in a conventional manner. A thick film printed element could be used instead.

At the centre of the heating chamber cover member 22 is a water inlet orifice 36. As will be appreciated from Fig. 1, the chamber wall member 22 forms a dividing barrier between the water reservoir 12 and the heating chamber 8. The orifice 36 can therefore allow water to flow from the water reservoir 12 into the heating chamber. The orifice 36 is formed with four radially extending lobes 38 which give improved flow as compared to a circular aperture of the same overall area. Beneath the orifice 36 is a flap valve 40 (seen best in Fig. 3). The flap valve 40 has an elongate rectangular shape and as can also be seen from Fig. 3, it is received in a rebate 42 defined in the underside of the upper surface 26 of the chamber cover member. The flap valve 40 is made of silicone rubber and is staked to the upper surface of the cover member by a pair of rivets 44. The flap valve 40 is planar for most of its length although at its distal end, directly beneath the orifice, a cylindrical downwardly open cup 46 is integrally moulded thereon.

On the right-hand side of Figs. 2 and 3 is a vertically extending cylindrical tube 48, the upper end of which receives the lower end of the conduit tube 14. The lower end of the vertical tube 48 is received by a foot member 50 which is castellated around its lower edge in order to allow the passage of water and steam between the castellations whilst acting as a coarse filter against the ingress of e.g. large pieces of scale etc. Directly beneath the vertical tube 48 the heater plate 16 is formed with a shallow recess 52 which facilitates the flow of water up into the tube 48 as it undergoes the required 90° change of direction. The tube 48 can conveniently be moulded into a suitably formed aperture in the upper surface 26 of the chamber cover member. The arrangement shown in this embodiment seeks to maximise the amount of water ejected from the heating chamber. However in other embodiments it might be desirable for some water to remain in the heating chamber - e.g. to protect the element against the thermal shock of the sudden ingress of cold water. This can be achieved by making the tube 48 shorter so that it stops short of the heater plate 16, or by making the castellations larger.

The upper dispensing chamber 10 will now be described. Protruding from beneath the chamber is an inlet pipe 54 which receives the upper end of the conduit 14. As may be seen, the inlet pipe 54 extends vertically inside the chamber to about three quarters the maximum height of the chamber. The inlet pipe 54 extends up into a larger diameter, coaxial, cylindrical tube 56 which depends downwardly from the top of the chamber 58. The downwardly depending tube 56 extends down just short of the base of the chamber 60.

It will be seen that the chamber comprises two parts: an upper part providing the sloping top of the chamber 58 and correspondingly tapering side wall 62; and the lower part forming the base of the chamber 60. These two parts are snap fitted together with an O-ring seal 64 being provided between them. Around the upper part of the side wall 62 where it meets the highest part of the sloping top 58, a series of apertures 66 is provided in a slightly recessed part of the wall 62 which in use allow any steam at the top of the chamber to escape into the main vessel body.

On the opposite side of the chamber to the inlet arrangement 54, 56, the base of the chamber 60 is stepped down to form a shallow sump 68. Immediately above this sump and spaced a few millimetres from the base of it, is one, downwardly open, end of the outlet tube 70. As can be seen, the outlet tube extends initially vertically up from the sump 68, then horizontally for a short distance and then vertically down before terminating in an angled spout 6. It may also be seen that the top of the chamber 58 drops down around where the outlet tube 70 emerges from it in order more easily to accommodate the bends associated with its shape.

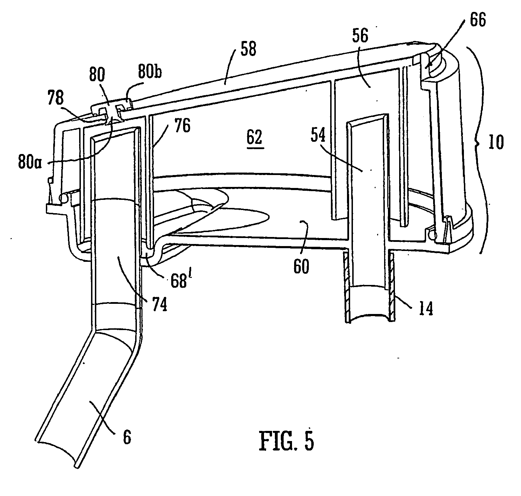

Fig. 5 shows a variant of the dispensing chamber 10. This differs from the vessel described above with reference to Fig. 4 in the configuration of the outlet tube. Here, the outlet tube 74 extends up through the bottom of the recessed sump area 68' inside a larger diameter, coaxial cylindrical tube 76 depending downwardly from the top of the chamber 58, so that the outlet of the chamber has a similar configuration to the inlet. The inner one of the coaxial tubes 74 extends to just a few millimetres short of the top of the chamber 58, whilst the outer tube 76 extends just short of the base of the sump area 68'. An aperture 78 is formed in the top of the chamber 58 on the common axis of the two outlet tubes 74, 76. This is normally closed by a resiliently deformable plug 80. This is formed with an annular skirt at the base of its stem 80a which extends slightly proud of the inwardly facing edge of the aperture 78 and is normally retained in this position by an annular peripheral ring 80b on the underside of the enlarged head portion of the valve which bears against the upper surface of the top of the chamber 58. However, if pressure is applied to the head of the plug 80, it deforms so as to rotate the rim 80b upwardly and away from the outer surface of the upper chamber wall 58 and simultaneously projects the stem portion 80a through the aperture thereby bringing the base of the stem away from the edge of the aperture 78. The result of this is that the seal provided by the plug 80 in the aperture 78 is broken, thereby allowing air past it and into the outlet tubes 74, 76.

A description of the operation of the vessels described above will now be given, with reference to Figures 1 to 5.

Initially, the vessel 2 is filled with water, thereby filling the reservoir 12. If the heating chamber 8 is empty, the pressure of the water in the reservoir will cause water to open the flap valve 40 and therefore fill the heating chamber 8 through the orifice 36. As the water level in the heating chamber 8 begins to rise, air trapped in the cup 46 at the distal end of the flap valve 40 will cause the flap valve to rotate up to its closed position against the rebate 42. Thus once the chamber 8 has filled to a predetermined level, the valve is closed and no more water flows in.

When it is required to dispense boiling water, the heating element 30 is energised which rapidly heats the relatively small volume of water in the heating chamber. Since the chamber is essentially enclosed, as the water is heated, the pressure in the chamber begins to increase. On one hand this serves to provide further closure pressure for the flap valve 40 against the recess 42 and thereby counters any tendency for further water to leak into the heating chamber, e.g. as a result of turbulence in the water being heated. On the other hand, the pressure begins to force water up the outlet tube 48 and into the conduit 14.

As the temperature of the water in the heating chamber 8 reaches approximately 90°C, a bimetallic actuator on the control unit (not shown) reaches its operating temperature and reverses its curvature in a snap action in order to open a set of electrical contacts and thereby interrupt the supply of electrical power to the heating element 34. However, although the element 34 is then de-energised, its finite (and known) thermal mass means that heat is stored in it which continues to be dissipated even after it has been de-energised. This heat is sufficient to bring the relatively small volume of water in the chamber 8 to boiling point.

As the water in the chamber 8 reaches boiling point, the pressure in the chamber increases rapidly as steam is produced. This pressure forces the boiling water up the outlet tube 48 into the conduit 14 and then into the inlet arrangement 54, 56 of the dispensing chamber 10. Although most of the water in the heating chamber will be at boiling point, there is a small quantity of water that is initially ejected therefrom which is at a slightly lower temperature since it entered the outlet tube 48 before it had been heated to boiling.

As will be appreciated from Figure 4, as the pressurised, boiling water is forced up the conduit 14 into the inlet pipe 54 it will impinge upon the roof of the chamber 58 inside the larger diameter tube 56. The water will then pass down the outer inlet tube 56 around the smaller inlet tube 54 and exit through the gap between the base of the chamber 60 and the lower end of the tube 56. As the dispensing chamber 10 begins to fill up therefore, the boiling water from the heating chamber will enter the main part of the dispensing chamber 10 at the bottom.

Particularly when the heating chamber 8 is nearly empty, steam is forced up the conduit 14 along with the boiling water. This too will tend to eject against the roof of the dispensing chamber 58 inside the outer cylindrical tube 56, where some will condense, but some steam will pass out underneath the bottom of the tube 56 and into the water held in the dispensing chamber. The effect of this steam exiting into the water and therefore passing through it, is to warm the water in the dispensing chamber 10 back to boiling point from which it will have inevitably dropped slightly by virtue of mixing with the cooler water initially ejected. Steam which does not condense during its passage through the water will pass into the space above the water at the top of the chamber from where it may escape through the vents 66 at the highest part of the chamber.

As the water level in the chamber rises, the level of water will similarly rise in the first downwardly extending part of the outlet tube 70. When the water level in the main chamber 10 has risen sufficiently, the water in the outlet tube 70 will reach the horizontal portion and then start to flow out under gravity towards the outlet spout 6. This sets up a siphon so that substantially the whole of the chamber is drained, the recessed sump region 68, ensuring that there is only a tiny volume of water left at the bottom which the siphon cannot drain out. Although the dispensing of the water commences as boiling water is still being ejected from the heating chamber and into the dispensing chamber, the configuration of the inlet to the dispensing chamber 10-in this vessel the double coaxial tubes forming a "water trap" - means that the dangerous pressurised boiling water and steam are safely ejected into the dispensing chamber 10 whilst the water being dispensed at the outlet is a slow, uniform flow which is essentially independent of the water still coming in from the heating chamber. In other words, the dispensing chamber acts effectively to decouple the outlet from the heating chamber from the outlet to the user.

The base of the dispensing chamber 60 has a gentle slope so that the last of the water in it will collect in the sump region 68 and so be drained out by the outlet tube siphon apart from a very thin layer at the bottom of the sump 68. The amount of water remaining in the sump will typically be of the order of only a few millilitres and thus even when, in the next cycle of operation, the remaining water which would by then have cooled is mixed with the fresh incoming boiled water, it will have a negligible impact on the bulk temperature of the water in the dispensing chamber.

Thus in the vessel described above it can be appreciated that in a very short period of time a predetermined quantity of water is heated to boiling and dispensed through a spout in a safe and controlled manner. This can be achieved despite the water being heated fully to boiling point and moreover despite the inevitable mixing with a small quantity of water that did not reach boiling point. The negative effect of such cooler water is ameliorated by passing steam generated at the end of the boiling process through it prior to it being dispensed. The steam condenses and brings the bulk temperature of the water substantially or completely back to boiling point. Thus the water dispensed to the user is at least substantially at boiling point and can therefore be used for any application where boiling water is required e.g. for making tea.

Returning to Figs. 2 and 3 and the heating chamber 8, this is left at the end of the dispense cycle filled with steam. As the steam begins to cool and condense, the pressure in the heating chamber 8 is rapidly reduced, thus forcing open the flap valve 40 and sucking in cold water from the reservoir 12 to refill the heating chamber 8 ready for the next cycle of operation.

In the vessel described above, once the siphon has been set up in the outlet tube 70, it will persist until the dispensing chamber 10 has been emptied. Thus the apparatus will allays dispense the same, fixed amount of boiling water. However, the modified vessel shown in Fig. 5, allows for some control of the amount of boiling water dispensed. In this vessel, as the dispensing chamber 10' fills with water, the water level will rise inside the downwardly depending outlet tube 76 around the periphery of the inner coaxial tube 74. As the water level in the chamber continues to rise so that the water level in the tube 76 reaches the top of the inner coaxial tube 74 a siphon will be set up as the water drains out through the outlet tube 74 to the spout 6. Normally this siphon will drain substantially all of the contents of the dispensing chamber 10' through the spout 6. However, in this vessel the user has the option to depress the resilient plug 80, thereby allowing air into the downwardly depending tube 76. This disrupts the siphon and therefore stops further water being drawn out of the dispensing chamber. This therefore provides an effective mechanism for controlling the amount of water dispensed by depressing the button when a desired amount has been reached (noting of course that the water actually in the outlet tube 74 and spout 6 will be dispensed after the valve button 80 is depressed).

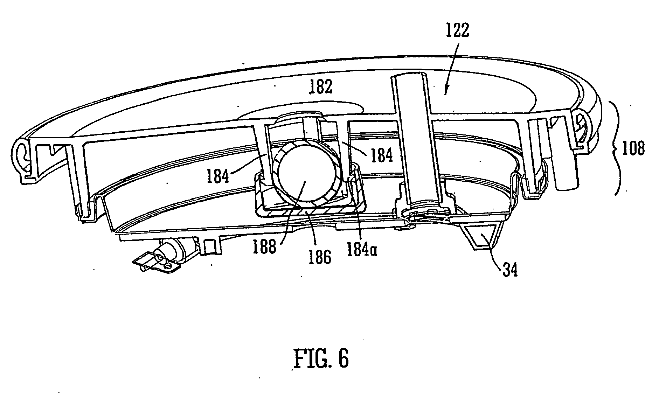

Fig. 6 shows a further vessel in which the heating chamber is modified as compared to the first two vessels. The difference in this vessel is that instead of the previously described flap valve arrangement, there is a ball valve arrangement. The heating chamber cover member 122 has a circular central aperture 182 defined therein, with a series of four integrally moulded and circumferentially spaced legs 184 depending downwardly from the lower surface of the chamber cover member 122 surrounding the aperture 182. The distal end of each leg 184 is formed with an outwardly facing hook-like projection 184a. These engage under an undercut in the annular upper rim of a top hat-shaped cage member 186. The cage member 186 can therefore be hooked onto the projections 184a to retain it in place vertically beneath the aperture 182.

The legs 184 and the cage member 186 between them define a cylindrical space in which a hollow, buoyant ball 188 can rise and fall over a short vertical travel. In the lower position depicted in Fig. 6, water can clearly pass through the aperture 182 from the water reservoir into the heating chamber 108. However, when the buoyant ball 188 is held against the underside of the aperture 182, it forms a seal, thereby preventing any further water entering the heating chamber 108. Moreover it will be observed from a careful study of Fig. 6, that when the ball 188 is in the lower position, the clearance between the surface of the ball 188 and the legs 184 is insufficient to allow them to flex inwardly enough to release the cage member 186. The consequence of this is that although the cage member 186 is held by a relatively simple click-fit mechanism, as long as the ball 188 is relatively incompressible, the cage member 186 cannot come away from the legs 184.

In operation the difference provided by this vessel is that if after dispensing has occurred and the reduction in pressure in the heating chamber 108 causes the rapid and possibly violent sucking in of water from the reservoir, the ball valve arrangement is able to withstand the more violent forces and does not suffer from any risk of becoming stuck in an open position. Again, both pressure within the chamber and the buoyant nature of the hollow ball 188 ensure that it is held closed when the chamber 108 is filled with water and during heating.

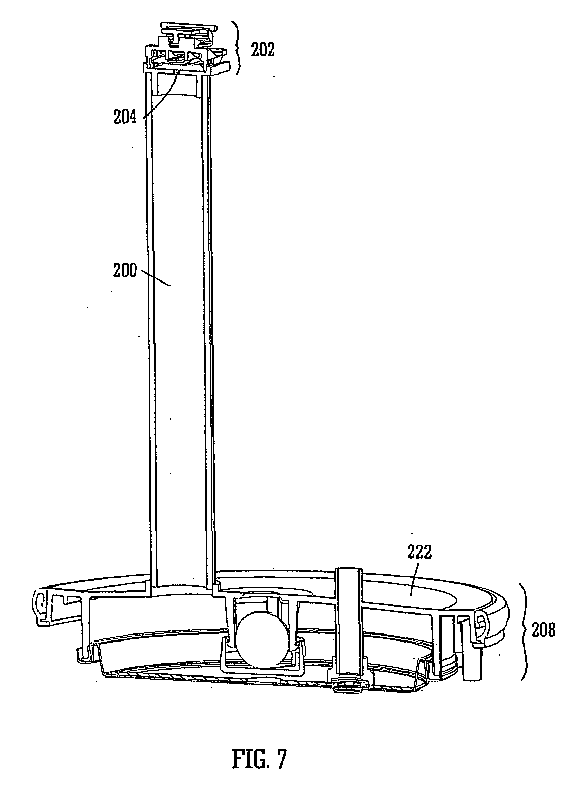

Fig. 7 shows a variant of the vessel described above with reference to Fig. 6. In this vessel, it will be noted that there is a relatively wide, vertical, cylindrical riser tube 200 extending from the heating chamber cover member 222 and opening into the heating chamber 208 at its lower end. At the top of the vertical riser tube 200, behind a small aperture, 204 is the applicant's standard R48 steam switch 202 which is more commonly used in domestic kettles for automatically switching them off when boiled. As is well known to those skilled in the art this comprises a snap acting bimetallic actuator which acts on a rocker arm that moves over-centre to open a set of electrical contacts.

In this vessel, the heating element 34 is not de-energised when the water in the heating chamber 208 reaches 90°C, but rather when sufficient steam reaches the bimetal of the steam switch 202. The small aperture 204 provided at the top of the tube can be tuned to give the desired performance. Since the aperture 204 is relatively narrow, even when water in the heating chamber boils, it will not be forced up the tube 200 by the steam pressure. Moreover, since the steam switch 202 is at the top of the steam tube 200, which is the reverse of the conventional arrangement in automatic kettles, it is likely to be actuated when the water is just reaching boiling or even just before, which mimics the action described in respect of the previous vessel whereby the element is switched off prior to boiling and residual heat in the element is used to bring the water fully to boiling. The advantage of this vessel over using a bimetal in contact with the diffuser plate to sense the temperature of the water, is that it is more tolerant to the build-up of scale on the surface of the heater plate which can raise the running temperature of the heater plate compared to the water temperature. It also enables the use of pre-existing components in the shape of steam switch itself and in the control unit which is still required for protection against dry switch on. In this vessel, a standard U17 control could be used for example.

This vessel also avoids the need for a relatively tight tolerance bimetal for sensing the temperature of the water at the appropriate point. Otherwise, the operation of this vessel is identical to those previously described.

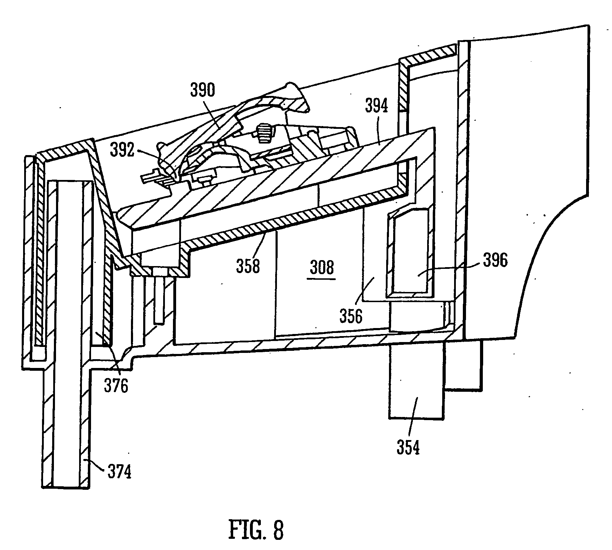

Fig. 8 shows the dispensing chamber of a further vessel. This is a modified version of the dispensing chamber shown in Fig. 5. In common with earlier vessels it comprises a double tube inlet 354, 356 and double-tube outlet 374, 376. However in this vessel the top of the chamber 358 defines a recess which receives a modified version of the Applicant's R48 steam switch 390 with the bimetal removed. This therefore acts simply as a latching, over-centre switch. The 'nose' 392 of the over-centre trip lever is acted upon by the end of a pivotally mounted lever 394 rather than a bimetal which would be conventional. At its other end the pivoting lever 394 has a downwardly depending arm, at the lower end of which is an integrally formed hollow float 396.

In use as water begins to near boiling in the heating chamber (not shown) and is ejected into the dispensing chamber 308 via the inlet tubes 354, 356 in the manner previously described, the water level in the heating chamber will begin to rise. This lifts the float 396 and thus causes the arm 394 to rock back and so act on the trip lever 392 and cause it to trip, so switching off power to the heating element of the heating chamber. This method of switching off the heater might be more reliable than using a sensor (e.g. a bimetal) sensing the temperature of the heater plate as this temperature can be affected after some time by the presence of scale build-up inside the heating chamber. It is also less reliant on the tolerance of such a sensor or bimetal.

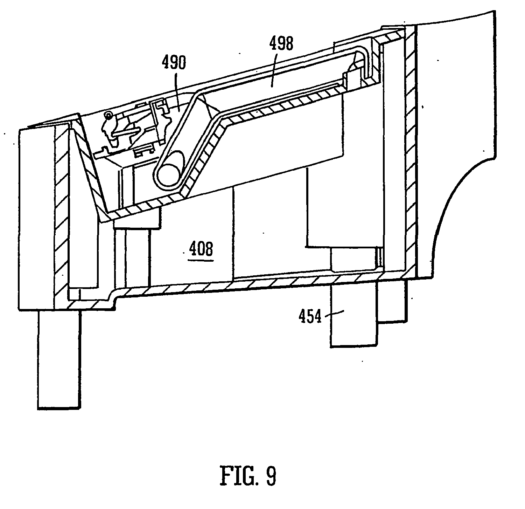

Fig. 9 shows an alternative vessel. This is similar to that of Fig. 8, except that here the steam switch 490 is fully conventional - i.e. the bimetal is retained - and instead of a float arm, a steam tube 498 communicates the bimetal of the steam switch with the interior of the dispensing chamber 408. In this vessel therefore the presence of steam in the dispensing chamber is used as the trigger to switch off the heating element. It will be appreciated from the earlier description that there will be relatively little steam that has passed through the water in the chamber 408, however this is balanced by the proximity of the steam switch 490 to the chamber in comparison with Fig. 7 say, or ordinary steam tube and steam switch arrangements.

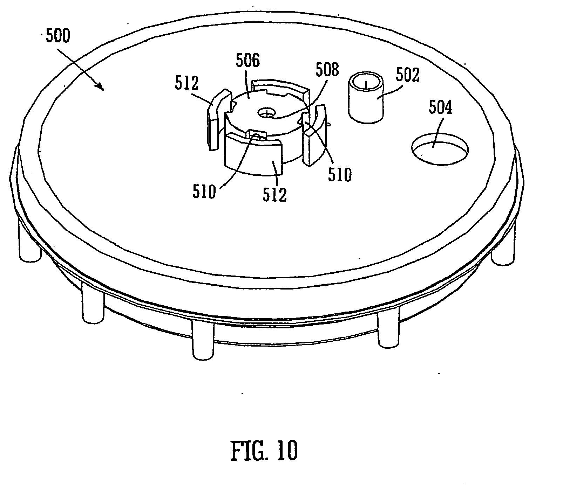

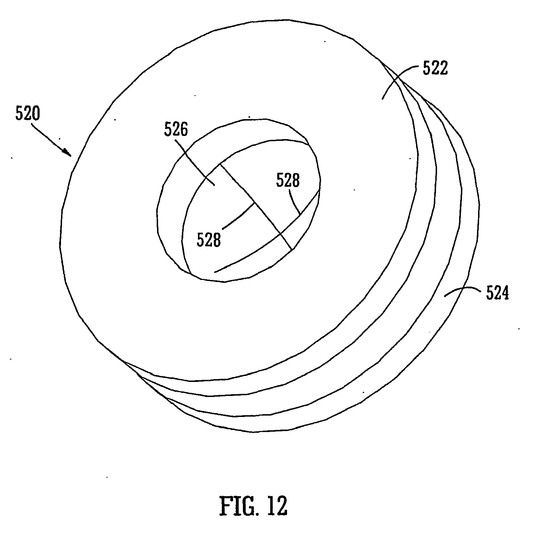

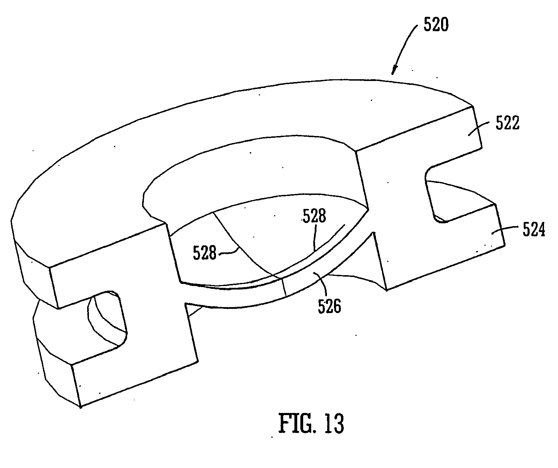

Fig. 10 shows a heating chamber cover member 500 of another vessel of the invention. As in previous vessels this has a vertically projecting tube 502 to connect the heating chamber beneath to the upper dispensing chamber. The cover member 500 also defines an aperture 504 into which a special valve is fitted, as will be described later with reference to Figs. 12 and 13.

In the centre of the cover member 500 is a hollow, cylindrical projection 506 which has a hole 508 at the top and a series of four vertical slots 510 spaced around its side wall. Corresponding arcuate baffles 512 are provided opposite and spaced slightly from each of the slots 510. The slots 510 cause water to exit the reservoir primarily laterally rather than vertically. The baffles 512 disrupt the flow into the slots. Both of these help to prevent excessive amounts of air being drawn into the heating chamber when the water level in the reservoir is low, which is a significant factor in generating unwanted noise.

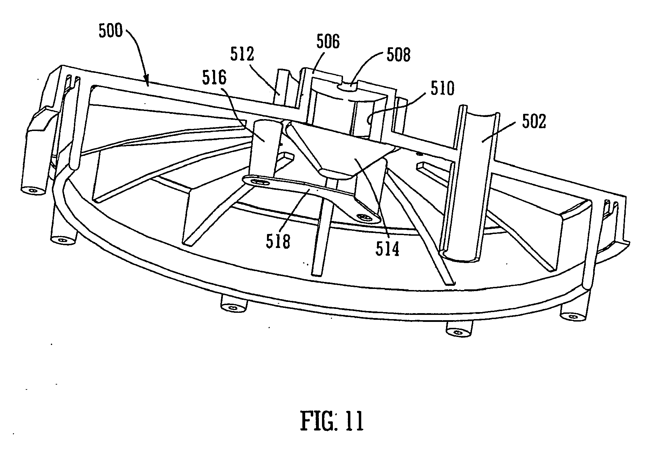

As Fig. 11 shows, the valve arrangement differs from that of previous vessels. Instead of a ball valve, in this vessel the valve member 514 is frusto-conical in shape with its taper downward. Rather than a cage as in previous vessels, the valve housing is formed by three downwardly protruding bosses 516 (two of which are visible) to which tri-lobed valve stop plate 518 is attached. This valve arrangement has been found to be very robust without the valve member becoming jammed. Of course other shapes of valve members and other housing arrangements could be used.

Returning to the circular aperture 504 in the cover member (see Fig. 10) this is closed in use by a silicone rubber grommet valve 520 which will now be described in more detail with reference to Figs. 12 and 13. The outer periphery of the valve comprises a pair of annular flanges 522, 524 which define a channel between them to sealingly receive the edge of the circular aperture 504 in the chamber cover member in the manner of a conventional grommet. The inner part of the valve is closed by a domed diaphragm 526. The valve 520 is fitted into the aperture 504 so that concave face of the diaphragm 526 is on the water reservoir side, the convex face being on the heating chamber side.

The diaphragm has two orthogonal slits 528 through its thickness defining four quadrant flaps which under normal conditions are held together by the inherent resilience of the silicone formed into the dome shape. This therefore provides a fluid-tight seal while water is being boiled in the water chamber. In one example the pressure in the heating chamber during boiling is approximately 14 kiloPascals (kPa). However after the heating chamber has been emptied and the air therein has cooled, a vacuum is generated which in one example can be of the order of -50 kPa. With such a pressure differential across the valve 520 (atmospheric pressure plus a small water head pressure on the reservoir side and a -50 kPa relative vacuum on the heating chamber side), the four flaps are forced apart against their natural resilience, thereby allowing water from the reservoir to enter the chamber. This path for water to pass into the heating chamber from the reservoir is in addition to the valve located at the centre of the cover member 500. Sucking the water in through a greater aggregate surface area further reduces the noise generated.

The valve 520 also performs an additional function. If, during boiling, the pressure in the heating chamber should increase towards a dangerous level, e.g. if the outlet pipe had somehow become blocked, then the four diaphragm flaps are forced to reverse their curvature and are further forced apart to provide a mechanism for relieving the excess pressure in the heating chamber safely into the water reservoir (and thus away from the user). In one example this might happen at a pressure of approx 70 kPa

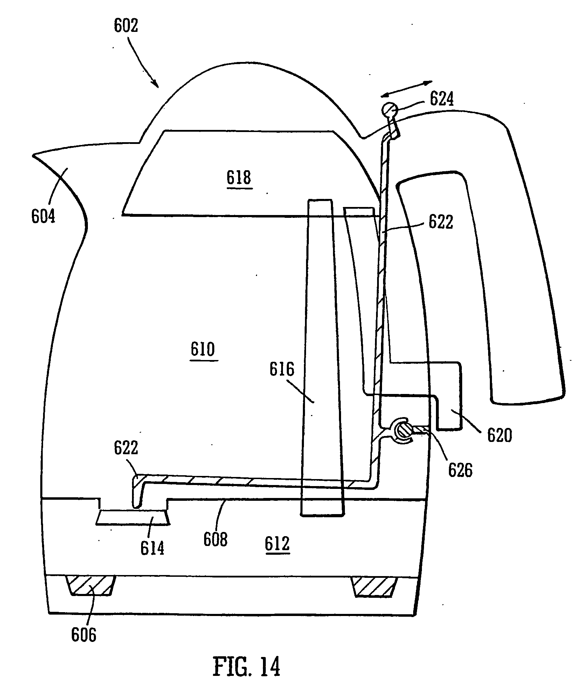

Fig. 14 shows a vessel which can be operated in two different modes. As will be seen the overall apparatus 602 resembles an ordinary jug kettle with a pouring spout 604 on the upper part thereof and a rear handle etc. Also conventional is a sheathed heating element 606 provided on the underside of a metallic plate forming the base of the interior of the vessel. However unlike in a conventional kettle, the interior of the vessel is divided into two discrete sections by a horizontal dividing wall 608. The upper section forms a water reservoir 610 and the lower section forms a heating chamber 612. A valve 614 is provided in the dividing wall 608 to allow water to enter the heating chamber. A conduit 616 extends vertically from the heating chamber 612 to a dispensing chamber 618, which is functionally the same as that described in earlier vessels is disposed in the upper portion of the vessel. A dispensing spout 620 extends down from the dispensing chamber 612 and projects from the rear of the vessel, The vessel is recessed to allow a cup or mug to be placed beneath the outlet tube in order to receive hot water when it is dispensed from the vessel. It will be seen therefore that the vessel has all the components to allow it rapidly to boil and dispense a small volume of water in exactly the same way as in earlier vessels.

Further provided in this vessel however is a 'L' shaped lever having a vertical portion which extends into the top of the vessel's handle to engage a knob 624. The horizontal portion 622b is terminated in a projection immediately above the valve 614. The lever 622 is mounted to the vessel wall on a pivot 626.

In use the user can operate the vessel in one of two configurations depending upon the position of the knob 624. With the knob 624 in a rearward position, the distal end of the lever 622 is lifted away from the valve member 614 and the vessel can therefore operate to rapidly boil and dispense a small volume of water in the sealed heating chamber in exactly the same way as in earlier vessels.

If the user pushes the knob 624 forwards however, the distal end of the lever 622 bears onto the valve member 622 and prevents it from closing. This means that rather than operating as described in accordance with earlier vessels, the heater 606 will simply heat all the water in the vessel - i.e. in the reservoir 610 as well as the heating chamber 612 since the water can freely circulate between them. This mimics the action of a conventional kettle. A steam switch or other boiling detector can be employed as is well known in the art. Once heated or boiled the vessel can be picked up and water poured out from the spout 604. This vessel therefore allows a dual purpose appliance without significant additional cost.

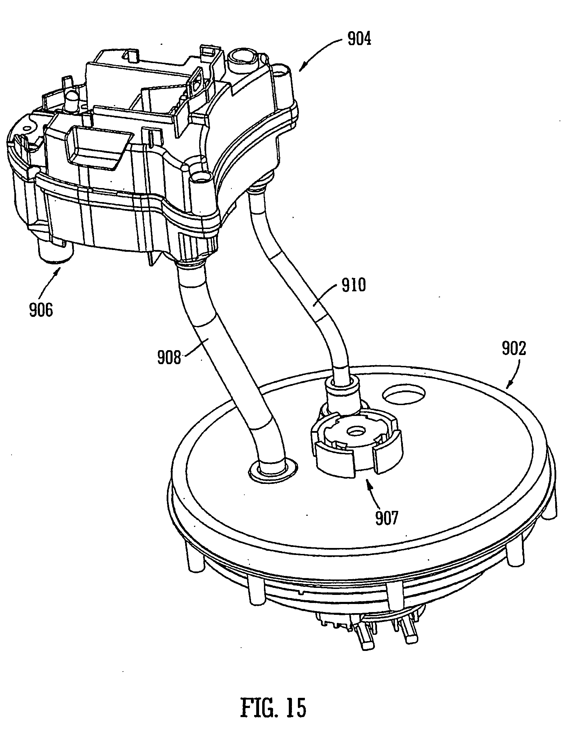

An embodiment of the invention will now be described with reference to Figs. 15 to 20. Fig. 15 shows the major internal parts of a hot water dispenser in accordance with the invention. In the lower part of the Figure is the heating chamber 902 and above this is the dispensing chamber 904. Although the main body of the appliance has been omitted for clarity from these Figures, in use they are provided within a housing so as to form a water reservoir above the heating chamber 902. The dispensing spout 906 can be seen in this Figure, which in use projects from the housing. A float valve arrangement similar to that of previous vessels is indicated generally by the numeral 907.

It will be observed that there are two tubes connecting the interior of the heating chamber 902 to the interior of the dispensing chamber 904. The wider of the two tubes is the outlet conduit 908 for the heating chamber through which, as in previous vessels, heated water passes up into the dispensing chamber 904 before being dispensed from the spout 906. The other tube is a ventilation tube 910, the function of which will become apparent in the description below.

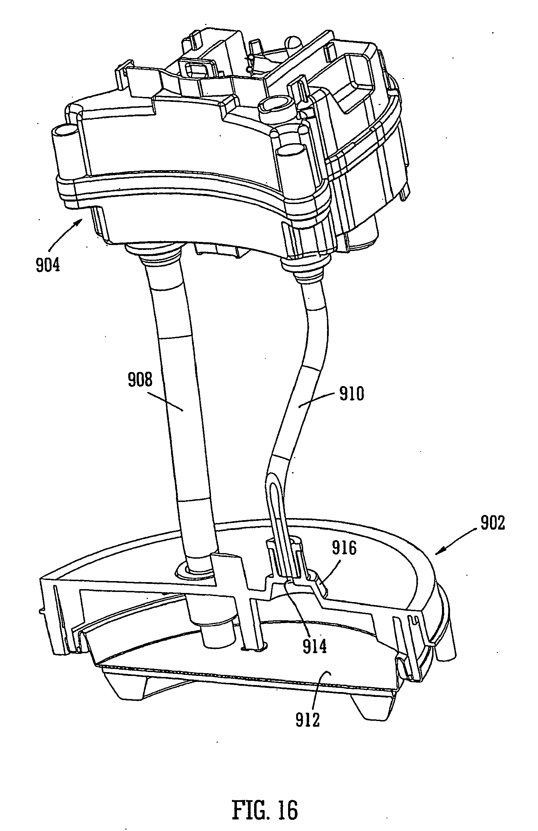

Fig. 16 shows a view of the dispensing chamber 904 from the rear with a vertical cross-section through the heating chamber 902. As in previous vessels, the outlet conduit 908 for heated water extends down into the heating chamber 902 towards the heater plate 912 which forms the base of the chamber. This is similar to previous vessels. The ventilation tube 910 communicates with a narrow aperture 914 which is formed in a raised portion 916 of the roof of the heating chamber.

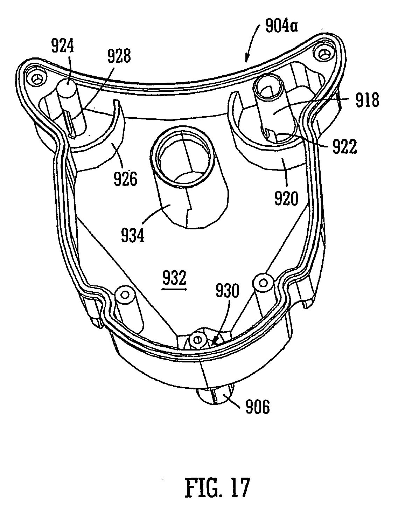

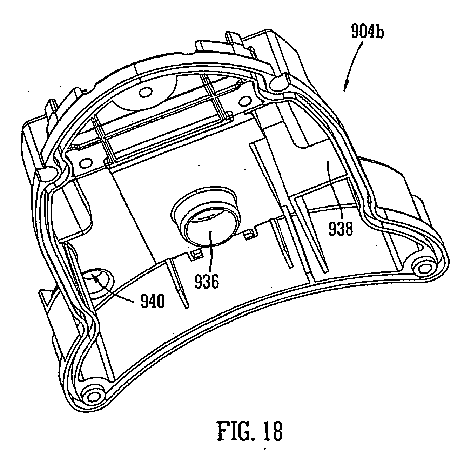

Figs. 17 and 18 are perspective views of the lower part 904a and upper part 904b of the dispensing chamber respectively. Looking first at Fig. 17, in the top right hand corner there may be seen a vertically extending riser tube 918 which is in communication with the water conduit 908 from the heating chamber. Partly surrounding and spaced from the vertical riser tube 918 is an arcuate wall 920 which forms a weir against flow from the riser tube 918 and so, together with the side walls of the dispensing chamber, acts to retain a small amount of water in the vicinity of the inlet riser 918. A small slit 922 in the inlet riser may be seen which extends from the floor of the dispensing chamber 904a to a height below the height of the weir 920. The slit 922 therefore allows water retained behind the weir 920 to drain back down the conduit 908 into the heating chamber 902.

In the top left corner of the dispensing chamber lower section 904a is a second, narrower inlet riser tube 924 connected to the ventilation pipe 910 shown in Fig. 16. An arcuate weir 926 is similarly provided in front of the ventilation riser 924 and a slit 928 is similarly provided in the riser 924, although in this case the slit extends vertically above the height of the corresponding weir 926.

At the front of the dispensing chamber lower section 904a is an aperture 930 in the base 932 which communicates with the outlet spout 906 for dispensing the heated water. It may be observed that the base of the dispensing chamber 932 slopes down from the back towards the dispensing aperture 930. Approximately in the centre of the dispensing chamber lower section 904a is an integrally moulded chimney section 934. Together with a mating chimney section 936 in the dispensing chamber upper section 904b (Fig. 18) this forms a passage through the dispensing chamber 904 which is sealed from its interior. The purpose of this is to provide ventilation to a snap-acting bimetallic actuator which forms part of the steam switch (not shown) mounted above the dispensing chamber upper section 904b.

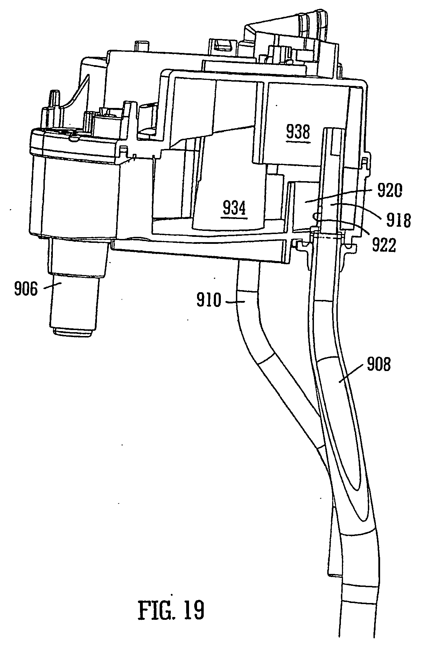

The dispensing chamber upper section 904b shown in Fig. 18 broadly forms a lid over the lower section 904a in order to provide an enclosed space. A right-angled vertical baffle 938 depends downwardly from the interior roof of the dispensing chamber upper section 904b outwardly of, although stopping short vertically of, the inlet weir 920. This arrangement may be seen more clearly in the cross-sectional view of the assembled dispensing chamber shown in Fig. 19.

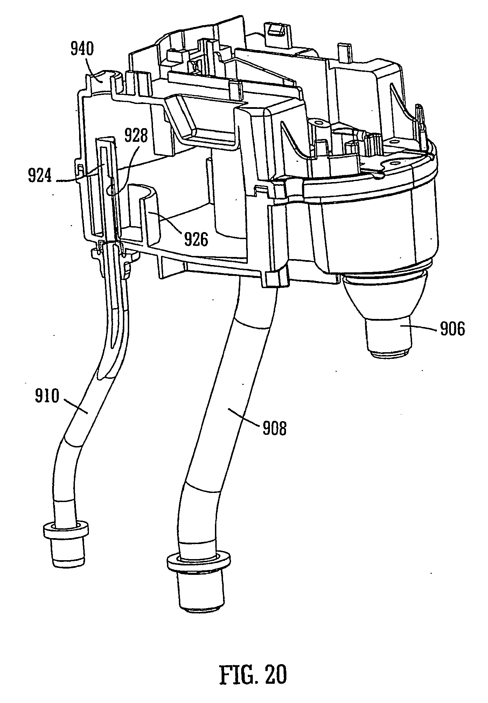

An aperture 940 is provided in the roof of the dispensing chamber upper section 940b directly above the ventilation inlet riser 924 as may be seen more clearly in the cross-section of the assembled dispensing chamber shown in Fig. 20.

Operation of the embodiment of Figs. 16 to 20 will now be described, particularly where this operation differs from that of previous vessels.

Firstly water is admitted from the reservoir through the float valve arrangement 907 into the heating chamber 902. Even when water in the heating chamber 902 covers the lower end of the outlet conduit 908, the ventilation pipe 910 allows air to escape from the heating chamber 902 and thus facilitate the smooth inflow of water through the valve 907.

As in previous vessels, the water in the heating chamber 902 is heated by the heater 912, however the ventilation pipe 910 assists at this stage by limiting the pressure build up inside the heating chamber 902 so preventing premature ejection of cool water from the conduit 908 into the dispensing chamber 904. However, as heating progresses, the pressure in the heating chamber 902 will rise and force some water up the conduit 908 and into the dispensing chamber 904. The first water ejected slowly is likely not to be at boiling point, however this initial "dribble" is prevented from entering the main part of the dispensing chamber by the inlet weir 920. Rather, it is retained behind the weir 920. As the water in the heating chamber reaches boiling, the bulk of the water will be forced up the conduit 908 into the inlet riser 918 and spurt from the top of the riser 918 into the space formed by the roof of the dispensing chamber upper section 904b and the right-angled baffle 938. From here the boiling water will run down the inside edge of the vertical baffle 938 and into the main part of the dispensing chamber where it flows towards the outlet aperture 930 and from there out through the outlet spout 906. It will be seen therefore that in common with other vessels the arrangement of the dispensing chamber is such as effectively to decouple the rapidly in-flowing boiling water ejected from the heating chamber to a smoother, more controlled flow out from the spout 906.

During at least the peak output from the heating chamber 902, the flow rate of boiling water into the chamber from the conduit 908 will be greater than the outflow rate through the spout 906 and thus the chamber will begin to fill with boiling water so that steam which is ejected from the heating chamber along with the boiling water passes at least partially through water in the dispensing chamber.

Cooler water which is pushed up the water conduit 908 or even the ventilation tube 910 which tends to dribble out of the respective risers 918, 924 will be retained by the respective weirs 920, 926. When dispensing has finished and the pressure in the heating chamber reduces, this water can drain back through the slots 922, 928 in the water inlet riser 918 into the ventilation riser 924 respectively and into the heating chamber. This means that the initial dribble of water does not reduce the temperature of the water dispensed through the spout 906.

Although Fig. 15 shows a hole in the upper surface of the heating chamber 902 to receive a pressure release valve, for example of the type discussed in relation to earlier embodiments but not shown in Fig. 15, the ventilation tube 910 may render a separate pressure release valve unnecessary.

It will be appreciated by those skilled in the art that the embodiment described above is only an example of the many possible ways in which the invention can be implemented. Although the embodiments described combine several advantageous features, it is not considered essential for all of these features to be provided together. For example, the siphon outlet arrangement and dispensing chamber may be advantageous even when not used with an arrangement in which steam is passed through water in the dispensing chamber. Similarly the dual action pressure relief valve may have many other possible applications, as may the vent holes or weirs.

## Claims

1. An apparatus for heating a measured amount of water to boiling, said apparatus comprising:
a heating chamber (902) comprising ventilation means (910) open to air,
a dispensing chamber (904), and
a conduit (908) for conveying water from said heating chamber (902) to an inlet (918) of said dispensing chamber (904),
the apparatus being arranged such that an increase in pressure associated with boiling forces the heated water into the conduit (908) and then into the dispensing chamber (904), the apparatus being **characterized by**:
a liquid reservoir in selective fluid communication with the heating chamber (902), the selective fluid communication being provided by a valve (907) in a wall of the heating chamber (902) .

2. An apparatus as claimed in claim 1 wherein the apparatus comprises a spout (906), and the dispensing chamber (904) comprises a hole (930), wherein the hole (930) communicates with the spout (906) to allow water to drain out of the dispensing chamber (904) through the hole (906).

3. An apparatus as claimed in claim 1 or 2 comprising an outlet spout (906) and means to prevent the flow of water from the spout (906) after dispensing has commenced.

4. An apparatus as claimed in claim 1, 2 or 3 wherein the inlet (918) to the dispensing chamber (904) comprises a weir (920).

5. An apparatus as claimed in claim 4 further comprising drainage means (922) to drain the contents of the weir (920).

6. An apparatus as claimed in any preceding claim wherein the heater (912) forms the base of the heating chamber (902).

7. An apparatus as claimed in any preceding claim wherein the reservoir is adjacent the heating chamber (902).

8. An apparatus as claimed in any preceding claim wherein the heating chamber (902) is below the reservoir.

9. An apparatus as claimed in any preceding claim wherein the reservoir is removable.

10. An apparatus as claimed in any preceding claim wherein the valve (907) is closed when the heating chamber (902) is filled to the required level.

11. An apparatus as claimed in any preceding claim wherein the valve (907) comprises an orifice in the wall separating the water reservoir and the heating chamber (902).

12. An apparatus as claimed in any preceding claim wherein the dispensing chamber (904) is above the heating chamber (902).

13. An apparatus as claimed in any preceding claim wherein the heating chamber (902) and dispensing chamber (904) are provided respectively in the lower and upper parts of a vessel, with the vessel defining the water reservoir therebetween.

14. An apparatus as claimed in any preceding claim wherein the ventilation means (910) is arranged to vent to the dispensing chamber (904).

15. An apparatus as claimed in any preceding claim comprising means for switching off the heater in the heating chamber (902) responsive to the presence of at least one of water, steam, or an elevated temperature or pressure in the dispensing chamber (904).

## Patentansprüche

1. Vorrichtung zum Erwärmen einer gemessenen Wassermenge bis zum Sieden, wobei die Vorrichtung enthält:
eine Erwärmungskammer (902), die Ventilationsmittel (910) enthält, die zur Luft geöffnet sind,
eine Abgabekammer (904) und
eine Leitung (908) zum Befördern von Wasser von der Erwärmungskammer (902) zu einem Einlass (918) der Abgabekammer (904),
wobei die Vorrichtung derart eingerichtet ist, dass eine Druckerhöhung, die mit dem Sieden verbunden ist, das erwärmte Wasser in die Leitung (908) und anschließend in die Abgabekammer (904) drängt, wobei die Vorrichtung **gekennzeichnet ist durch**:
einen Flüssigkeitsvorratsbehälter, der mit der Erwärmungskammer (902) in einer wahlweisen Fluidverbindung steht, wobei die wahlweise Fluidverbindung **durch** ein Ventil (907) in einer Wand der Erwärmungskammer (902) geschaffen ist.

2. Vorrichtung nach Anspruch 1, wobei die Vorrichtung einen Ausgießer (906) enthält und die Abgabekammer (904) ein Loch (930) enthält, wobei das Loch (930) mit dem Ausgießer (906) in Verbindung steht, um zu ermöglichen, dass Wasser aus der Abgabekammer (904) durch das Loch (906) ausfließt.

3. Vorrichtung nach Anspruch 1 oder 2, die einen Auslassausgießer (906) und eine Einrichtung, um die Wasserströmung aus dem Ausgießer (906) zu verhindern, nachdem die Abgabe begonnen hat, enthält.

4. Vorrichtung nach Anspruch 1, 2, oder 3, wobei der Einlass (918) zu der Abgabekammer (904) einen Überlauf (920) enthält.

5. Vorrichtung nach Anspruch 4, die ferner eine Ableitungseinrichtung (922) enthält, um den Inhalt des Überlaufs abzuleiten.

6. Vorrichtung nach einem vorhergehenden Anspruch, wobei die Erwärmungseinrichtung (912) die Grundlage der Erwärmungskammer (902) bildet.

7. Vorrichtung nach einem vorhergehenden Anspruch, wobei der Vorratsbehälter zu der Erwärmungskammer (902) benachbart ist.

8. Vorrichtung nach einem vorhergehenden Anspruch, wobei sich die Erwärmungskammer (902) unter dem Vorratsbehälter befindet.

9. Vorrichtung nach einem vorhergehenden Anspruch, wobei der Vorratsbehälter abnehmbar ist.

10. Vorrichtung nach einem vorhergehenden Anspruch, wobei das Ventil (907) geschlossen ist, wenn die Erwärmungskammer (902) bis zu dem erforderlichen Pegel gefüllt ist.

11. Vorrichtung nach einem vorhergehenden Anspruch, wobei das Ventil (907) eine Öffnung in der Wand, die den Wasservorratsbehälter und die Erwärmungskammer trennt, enthält.

12. Vorrichtung nach einem vorhergehenden Anspruch, wobei sich die Abgabekammer (904) über der Erwärmungskammer (902) befindet.

13. Vorrichtung nach einem vorhergehenden Anspruch, wobei die Erwärmungskammer (902) und die Abgabekammer (904) in dem unteren bzw. oberen Abschnitt eines Gefäßes vorgesehen sind, wobei das Gefäß den dazwischen liegenden Wasservorratsbehälter definiert.

14. Vorrichtung nach einem vorhergehenden Anspruch, wobei die Ventilationseinrichtung (910) eingerichtet ist, um die Abgabekammer (904) zu entlüften.

15. Vorrichtung nach einem vorhergehenden Anspruch, die eine Einrichtung zum Ausschalten der Erwärmungseinrichtung in der Erwärmungskammer (902) in Reaktion auf das Vorhandensein von Wasser und/oder Dampf und/oder einer erhöhten Temperatur oder eines erhöhten Drucks in der Abgabekammer (904) enthält.

## Revendications

1. Appareil pour chauffer une quantité mesurée d'eau jusqu'à ébullition, ledit appareil comportant :
une chambre de chauffage (902) comportant des moyens de ventilation (910) débouchant vers l'air,
une chambre de distribution (904), et
une conduite (908) pour acheminer l'eau à partir de ladite chambre de chauffage (902) jusqu'à une entrée (918) de ladite chambre de distribution (904),
l'appareil étant conçu de telle sorte qu'une augmentation de pression associée à l'ébullition force l'eau chauffée dans la conduite (908) et ensuite dans la chambre de distribution (904), l'appareil étant **caractérisé par** :
un réservoir de liquide en communication fluidique sélective avec la chambre de chauffage (902), la communication fluidique sélective étant assurée par une soupape (907) dans une paroi de la chambre de chauffage (902).

2. Appareil tel que revendiqué dans la revendication 1, dans lequel l'appareil comporte un bec verseur (906), et la chambre de distribution (904) comporte un trou (930), le trou (930) communiquant avec le bec verseur (906) pour permettre à l'eau de s'évacuer à l'extérieur de la chambre de distribution (904) à travers le trou (930).

3. Appareil tel que revendiqué dans la revendication 1 ou 2, comportant un bec de sortie (906) et des moyens pour empêcher l'écoulement d'eau à partir du bec verseur (906) après que la distribution ait débuté.

4. Appareil tel que revendiqué dans la revendication 1, 2 ou 3, dans lequel l'entrée (918) de la chambre de distribution (904) comporte un trop-plein (920).

5. Appareil tel que revendiqué dans la revendication 4, comportant en outre des moyens d'évacuation (922) pour évacuer le contenu du trop-plein (920).

6. Appareil tel que revendiqué dans l'une quelconque des revendications précédentes, dans lequel le dispositif de chauffage (912) forme la base de la chambre de chauffage (902).

7. Appareil tel que revendiqué dans l'une quelconque des revendications précédentes, dans lequel le réservoir est adjacent à la chambre de chauffage (902).

8. Appareil tel que revendiqué dans l'une quelconque des revendications précédentes, dans lequel la chambre de chauffage (902) se situe sous le réservoir.

9. Appareil tel que revendiqué dans l'une quelconque des revendications précédentes, dans lequel le réservoir est amovible.

10. Appareil tel que revendiqué dans l'une quelconque des revendications précédentes, dans lequel la soupape (907) est fermée lorsque la chambre de chauffage (902) est remplie jusqu'au niveau requis.

11. Appareil tel que revendiqué dans l'une quelconque des revendications précédentes, dans lequel la soupape (907) comporte un orifice dans la paroi séparant le réservoir d'eau et la chambre de chauffage (902).

12. Appareil tel que revendiqué dans l'une quelconque des revendications précédentes, dans lequel la chambre de distribution (904) se situe au-dessus de la chambre de chauffage (902).

13. Appareil tel que revendiqué dans l'une quelconque des revendications précédentes, dans lequel la chambre de chauffage (902) et la chambre de distribution (904) sont respectivement agencées dans les parties inférieure et supérieure d'un récipient, le récipient définissant le réservoir d'eau entre celles-ci.

14. Appareil tel que revendiqué dans l'une quelconque des revendications précédentes, dans lequel les moyens de ventilation (910) sont agencés de manière à décharger dans la chambre de distribution (904).

15. Appareil tel que revendiqué dans l'une quelconque des revendications précédentes, comportant des moyens pour arrêter le dispositif de chauffage dans la chambre de chauffage (902) en réponse à la présence d'au moins un élément parmi de l'eau, de la vapeur ou une température ou une pression élevée dans la chambre de distribution (904).
